# EUROPÄISCHE PATENTANMELDUNG

(11) **EP 1 247 762 A1**
(43) Veröffentlichungstag der Anmeldung: **09.10.2002**
(21) Anmeldenummer: 01126512.1
(22) Anmeldetag: 10.11.2001
(51) Int. Cl.: B65D 90/00, B65D 88/12, B60P 1/43

(54) **Frachtcontainer**

(30) Priorität: 05.04.2001 DE 10117003
(71) Anmelder: Warsteiner Brauerei Haus Cramer KG, 59581 Warstein (DE)
(72) Erfinder: Cramer, Albert, 59581 Warstein (DE)
(74) Vertreter: Fritz, Edmund Lothar, Dipl.-Chem.

(57) **Zusammenfassung**

Frachtcontainer mit einem im wesentlichen quaderförmigen Laderaum, der von wenigstens einem Ende her durch Einfahren eines Ladefahrzeugs beladbar ist, wobei für das Ladefahrzeug eine Einfahrrampe (15) vorgesehen ist, wobei die Einfahrrampe am Frachtcontainer um eine horizontale Achse schwenkbar angebracht ist und in einer eingeschwenkten Transportstellung die Einfahrrampe innerhalb des Frachtcontainers liegt, derart, dass die Öffnung des Laderaums durch Türen oder dergleichen ungehindert verschließbar ist.

## Beschreibung

Die vorliegende Erfindung betrifft einen Frachtcontainer mit einem im wesentlichen quaderförmigen Laderaum, der von wenigstens einem Ende her durch Einfahren eines Ladefahrzeugs beladbar ist, wobei für das Ladefahrzeug eine Einfahrrampe vorgesehen ist.

Bei herkömmlichen Frachtcontainern dieser Art, die z. B. als Seecontainer verwendet werden, ist es üblich, für das Be- bzw. Entladen eine separate Einfahrrampe vorzusehen, die in der Regel von demjenigen, der den Frachtcontainer entladen bzw. beladen möchte an den Container angestellt wird, so dass das Ladefahrzeug in diesen hereinfahren kann. Wenn beispielsweise in einem Betrieb mehrere solcher Frachtcontainer gleichzeitig be- oder entladen werden müssen, werden also mehrere derartiger Einfahrrampen benötigt. Außerdem müssen die Einfahrrampen jeweils zum be- oder entladen herangeschafft werden und sie nehmen bei Nichtgebrauch Lagerraum in Anspruch.

Aus der DE 44 40 046 A1 ist eine Anpassrampe zur Überbrückung zwischen einer Gebäuderampe und der Ladefläche eines Lastkraftwagens vorgesehen, die benutzt wird, wenn die Ladefläche des Lastkraftwagens höher liegt, als die Ebene der Gebäuderampe des Gebäudes, in das entladen wird. Dazu verfügt die Anpassrampe über eine Hubvorrichtung, so dass beim Anheben die Anpassrampe um eine Drehachse schwenkt, die auf der Gebäuderampe aufliegt. Die Anpassrampe ist außerdem mit einem ausfahrbaren Vorschubteil versehen. Auch die hier verwendete Anpassrampe ist ein separates Teil, welches in der Regel in dem Gebäude, in das das Ladegut des LKW entladen wird, vorhanden ist oder die Anpassrampe müsste von dem LKW mitgeführt werden, was einen nicht unerheblichen Platz im Laderaum beanspruchen würde. Die Anpassrampe ist nicht an der Ladefläche des LKW befestigt, sondern wird auf die Ladefläche aufgelegt. Außerdem handelt es sich bei einem LKW um ein Fahrzeug auf Rädern, bei dem die Ladefläche in der Regel eine größere Höhendifferenz gegenüber dem Untergrund aufweist, auf dem das Fahrzeug steht. Frachtcontainer, auf die sich die vorliegende Erfindung bezieht, haben dagegen in der Regel keine Räder. Folglich liegt die Ebene des Laderaums nur um eine geringere Strecke höher, als der Untergrund, auf dem der Frachtcontainer abgestellt ist. Mit einem LKW kann man an eine separate Anpassrampe, wie sie in der genannten Schrift beschrieben ist, heranfahren. Dies ist dagegen bei einem Frachtcontainer nicht möglich, so dass es bei Verwendung einer separaten Rampe immer erst notwendig ist, diese Rampe an den zu entladenden oder beladenden Frachtcontainer heranzubringen. Dies ist im Rahmen der vorliegenden Erfindung zu vermeiden.

Ausgehend von diesem Stand der Technik liegt daher der vorliegenden Erfindung die Aufgabe zugrunde, einen Frachtcontainer der eingangs genannten Gattung zu schaffen, bei dem keine zusätzliche separate Einfahrrampe notwendig ist.

Die Lösung der Aufgabe liefert ein gattungsgemäßer Frachtcontainer der eingangs genannten Art mit den kennzeichnenden Merkmalen des Hauptanspruchs. Erfindungsgemäß ist vorgesehen, dass die Einfahrrampe am Frachtcontainer selbst angebracht ist und zwar um eine horizontale Achse schwenkbar. Dadurch liegt die Einfahrrampe in einer eingeschwenkten Transportstellung, d. h., nach oder vor dem Be- oder Entladen innerhalb des Frachtcontainers und zwar derart, dass die Öffnung des Laderaums durch Türen oder dergleichen ungehindert verschließbar ist. Gewöhnlich wird daher beim Be- oder Entladen nach Öffnen der Türen des Laderaums diese Einfahrrampe um etwa 180° aus der eingeschwenkten Transportstellung in eine Gebrauchsstellung herausgeschwenkt, so dass dann über diese Einfahrrampe ein Ladefahrzeug in den Frachtcontainer hineinfahren kann.

Gemäß einer bevorzugten Weiterbildung der Erfindung ist es aber auch möglich, mit einem Ladefahrzeug in den Frachtcontainer hineinzufahren ohne zuvor die Einfahrrampe auszuschwenken. Dies ist insbesondere dann ohne weiteres möglich, wenn die Einfahrrampe in der eingeschwenkten Transportstellung so angeordnet ist, dass sie oberseitig im wesentlichen bündig mit der im Frachtcontainer sich anschließenden befahrbaren Fläche abschließt. In diesem Fall kann man also ohne weiteres mit einem Ladefahrzeug über die nicht ausgeschwenkte Einfahrrampe fahren. Außerdem hat dies den Vorteil, dass man nach Einschwenken der Einfahrrampe den Frachtraum problemlos vollständig z. B. mit Paletten beladen kann, ohne dass sich im Bodenbereich ein Absatz oder eine Unebenheit ergibt. Man kann dann beispielsweise zum Entladen den hintersten Teil der Fracht mit einem Entladefahrzeug entnehmen, welches an dem Frachtcontainer heranfährt, wobei man diesen soweit entlädt, dass dann die Einfahrrampe herausgeschwenkt werden kann. Anschließend kann man über die Einfahrrampe mit dem Ladefahrzeug weiter in den Frachtcontainer hineinfahren und die übrige Ladung entladen.

Um ein bündiges Abschließen der Einfahrrampe in der eingeschwenkten Transportstellung zu erreichen sieht man vorzugsweise vor, dass sich in dem an die Öffnung des Laderaums anschließenden Bereich des Bodens des Frachtcontainers eine Aussparung oder Vertiefung befindet, die die Einfahrrampe in der eingeschwenkten Transportstellung weitestgehend aufnimmt, so dass diese nicht nach oben über die übrige befahrbare Bodenfläche des Frachtcontainers hinausragt. Dabei sollte die Einfahrrampe so stabil ausgebildet sein, dass sie in der eingeschwenkten Transportstellung von einem gegebenenfalls beladenen Ladefahrzeug befahrbar ist und mit einem entsprechend hohen Gewicht belastbar ist, so dass sie auch bei vollständig beladenem Frachtcontainer problemlos das übliche Gewicht der auf der eingeschwenkten Einfahrrampe abgestellten Ladung aufnehmen kann.

Eine bevorzugte Weiterbildung der Erfindung sieht vor, dass im Bereich einer Seitenwand oder einer Tür des Laderaums des Frachtcontainers eine integrierte Dokumententasche vorgesehen ist, die derart ausgebildet ist, dass eine Sicht von außen auf in dieser Dokumententasche untergebrachte Frachtpapiere oder dergleichen möglich ist, wobei gleichzeitig die Entnahme dieser Dokumente aus der Dokumententasche nur vom Innenraum des Frachtcontainers her möglich ist. Dadurch erzielt man den Vorteil, dass man die Frachtpapiere eines abgestellten verschlossenen Frachtcontainers durch die durchsichtige Außenwand der Dokumententasche kontrollieren kann. Der bisher notwendige Zugang zum Innenraum des Frachtcontainers erübrigt sich daher. Andererseits sind die Frachtpapiere aber dennoch unverlierbar und geschützt gegen einen gegebenenfalls missbräuchlichen Zugriff in der Dokumententasche aufgehoben. Die Entnahme der Dokumente aus der Dokumententasche von der Innenseite des Frachtcontainers her kann z. B. durch Öffnen einer dort im Bereich der Dokumententasche vorgesehenen Klappe, Tür oder eines ähnlichen Verschlusselements, welches abschließbar sein kann, geschehen oder über einen Schlitz, in den die Dokumente von der Innenseite der Seitenwand oder der Tür einschiebbar sind.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen,
- Fig. 1: eine schematisch vereinfachte Schnittdarstellung des Einfahrbereichs des Frachtcontainers mit eingeschwenkter bzw. ausgeschwenkter Einfahrrampe (Figur 1a und 1b);
- Fig. 2: eine perspektivische Ansicht des Einfahrbereichs des Frachtcontainers mit eingeschwenkter Einfahrrampe;
- Fig. 3: eine entsprechende Ansicht des Einfahrbereichs ähnlich wie in Figur 2 mit ausgeschwenkter Einfahrrampe;
- Fig. 4: eine Ansicht der Dokumententasche von außen;
- Fig. 5: eine Ansicht der Dokumententasche von der Innenseite des Frachtcontainers her gesehen.

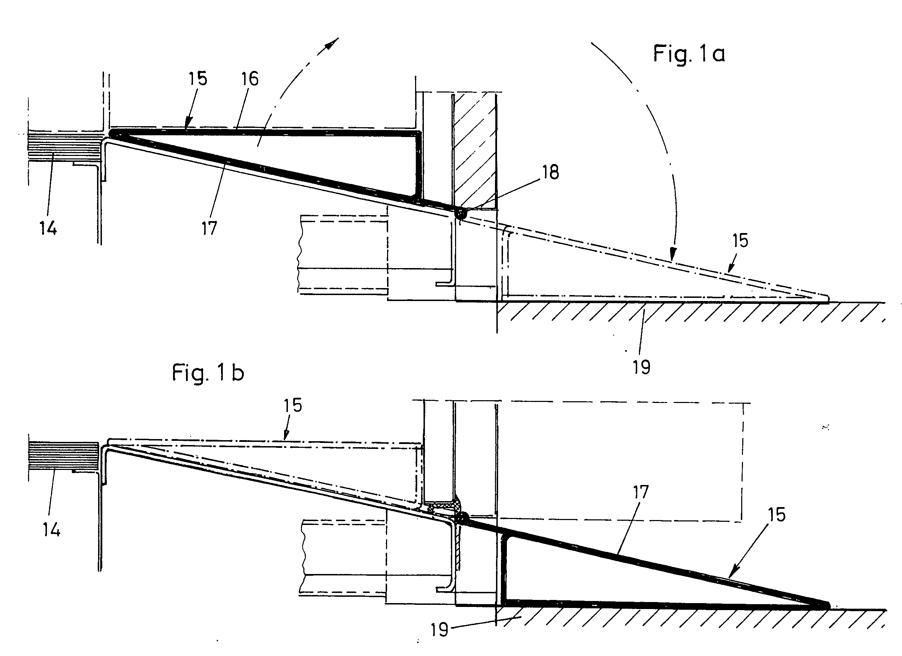

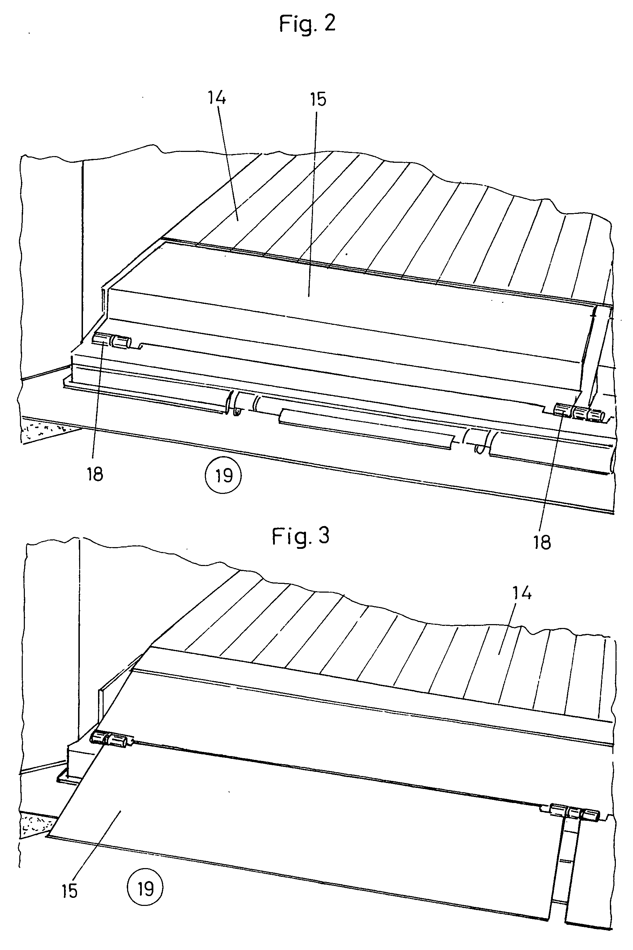

Zunächst wird auf Fig. 2 Bezug genommen. Die Darstellung zeigt eine perspektivische Ansicht des rückwärtigen Einfahrbereichs eines Frachtcontainers mit eingeschwenkter Einfahrrampe. Man erkennt den Laderaum 11 des Frachtcontainers, der rückseitig durch zwei nach außen schwenkbare Flügeltüren 12, 13 verschließbar ist. Die Bodenfläche des Laderaums ist mit 14 bezeichnet. Man erkennt, dass die eingeschwenkte Einfahrrampe 15, die sich hier also in der Transportstellung befindet, etwa bündig mit der Bodenfläche (befahrbare Fläche) 14 abschließt. Die Einfahrrampe 15 ist schwenkbar im hinteren Endbereich an dem Frachtcontainer angelenkt, wobei sie aus der in Figur 2 gezeigten Stellung um annähernd 180° in eine ausgeklappte Stellung schwenkbar ist, die in Figur 3 dargestellt ist. In dieser ausgeklappten Stellung befindet sich die Einfahrrampe 15 in ihrer Funktionsstellung, so dass ein Ladefahrzeug in den Frachtcontainer herein- oder herausfahren kann, um diesen zu beladen. Dieses Herausschwenken der Einfahrrampe 15 und deren Transportstellung bzw. Funktionsstellung sind in der vergrößerten Schnittdarstellung gemäß Figur 1a und Figur 1b wiedergegeben und werden unter Bezugnahme auf diese Darstellungen näher erläutert.

In Figur 1a erkennt man die eingeschwenkte Einfahrrampe 15 und die an deren dem Laderaum zugewandter Seite angrenzende Bodenfläche 14, die etwa mit der Unterseite 16 bündig liegt. Die Unterseite 16 der Einfahrrampe liegt in dieser eingeschwenkten Transportstellung oben und verläuft etwa horizontal.

Figur 1b zeigt nun die ausgeschwenkte Funktionsstellung der Einfahrrampe 15, bei der diese um etwa 180° um eine Achse 18 geschwenkt wurde, derart, dass sie mit ihrer Unterseite 16 auf einem Untergrund 19 aufliegt. Die in einem spitzen Winkel verlaufende Oberseite 17 weist nun nach oben. Dieser spitze Einfahrwinkel ist mit einer Neigung gewählt, dass ein bequemes Einfahren eines Ladefahrzeugs möglich ist, d. h., die Neigung darf nicht zu steil sein. In der eingeklappten Transportstellung gemäß Figur 1a liegt diese Oberseite 17 der Einfahrrampe 15 wie man erkennt unten. Im Längsschnitt hat die Einfahrrampe 15 somit eine dreieckige Form bzw. Keilform.

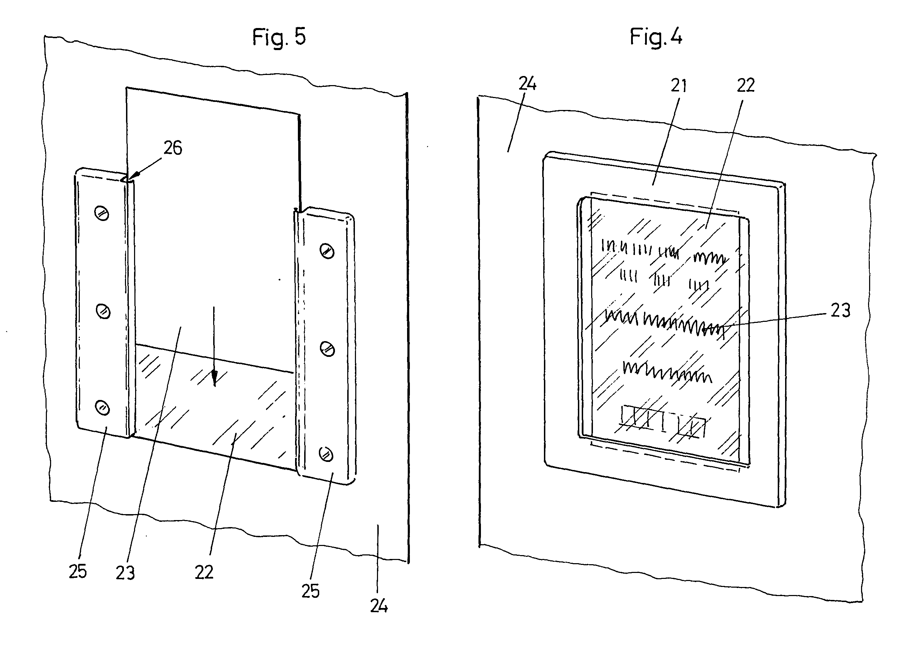

Nachfolgend wird auf die Figuren 4 und 5 Bezug genommen und anhand dieser eine Ausführungsvariante eines erfindungsgemäßen Frachtcontainers erläutert. Figur 4 zeigt eine Ansicht auf die Außenwand 20 eines Frachtcontainers mit einer Dokumententasche 21. Diese Dokumententasche 21 hat eine Sichtfläche 22 aus einem durchsichtigen Material wie Glas, durchsichtigem Kunststoff oder dergleichen, so dass man von außerhalb des Frachtcontainers her auf Dokumente 23 schauen kann, die von der Innenseite des Frachtcontainers her in diese Dokumententasche 21 eingeschoben wurden.

In Figur 5 ist die Dokumententasche 21 von der Innenseite her gezeigt. Man erkennt die Innenwand 24 sowie den Rahmen 25, in den Dokumente 23 wie Frachtpapiere oder dergleichen beispielsweise von oben her einschiebbar sind. Dabei hat der Rahmen 25 beispielsweise eine Art Nut 26, so dass man die Frachtpapiere 23 von oben her in diese Nut einschieben und nach oben hin wieder herausziehen kann. Da der abgestellte Frachtcontainer in der Regel verschlossen ist, ist dann ein Zugang auf die Frachtpapiere 23 nicht möglich, wobei diese aber dennoch von außen her lesbar sind, wie man aus Figur 4 erkennen kann.

## Patentansprüche

1. Frachtcontainer mit einem im wesentlichen quaderförmigen Laderaum, der von wenigstens einem Ende her durch Einfahren eines Ladefahrzeugs beladbar ist, wobei für das Ladefahrzeug eine Einfahrrampe vorgesehen ist, **dadurch gekennzeichnet, dass** die Einfahrrampe am Frachtcontainer um eine horizontale Achse schwenkbar angebracht ist und in einer eingeschwenkten Transportstellung die Einfahrrampe (15) innerhalb des Frachtcontainers liegt, derart, dass die Öffnung des Laderaums (11) durch Türen oder dergleichen ungehindert verschließbar ist.

2. Frachtcontainer nach Anspruch 1, **dadurch gekennzeichnet, dass** die Einfahrrampe in der eingeschwenkten Transportstellung so angeordnet ist, dass sie oberseitig im wesentlichen bündig mit der im Frachtcontainer sich anschließenden befahrbaren Fläche (14) abschließt.

3. Frachtcontainer nach Anspruch 1 oder 2, **dadurch gekennzeichnet, dass** in dem sich an die Öffnung des Laderaums anschließenden Bereich des Bodens des Frachtcontainers eine Aussparung oder Vertiefung gebildet ist, die die Einfahrrampe in der eingeschwenkten Transportstellung aufnimmt.

4. Frachtcontainer nach einem der Ansprüche 1 bis 3,**dadurch gekennzeichnet, dass** die Einfahrrampe in der eingeschwenkten Transportstellung befahrbar bzw. gewichtsbelastbar ist.

5. Frachtcontainer nach einem der Ansprüche 1 bis 4, **dadurch gekennzeichnet, dass** dieser in seinem Laderaum im wesentlichen vollständig, d. h., auch oberhalb der eingeschwenkten Einfahrrampe mit Paletten oder dergleichen beladbar ist.

6. Frachtcontainer nach einem der Ansprüche 1 bis 5, **dadurch gekennzeichnet, dass** dieser im Bereich einer Seitenwand oder einer Tür des Laderaums eine integrierte Dokumententasche aufweist, die eine Sicht von außen auf Frachtpapiere oder dergleichen zulässt, wobei eine Entnahme der Dokumente aus der Dokumententasche nur vom Innenraum des Frachtcontainers her möglich ist.
